Europäisches Patentamt

**European Patent Office**

Office européen des brevets

(11) Publication number:

**0 126 624**
**B1**

(12) **EUROPEAN PATENT SPECIFICATION**

(45) Date of publication of patent specification: **25.01.89**

(21) Application number: **84303345.7**

(22) Date of filing: **17.05.84**

(51) Int. Cl.⁴: **A 61 C 8/00**

(54) **Fixed dental implant.**

(30) Priority: **17.05.83 ES 272292**
**03.05.84 ES 279140**

(43) Date of publication of application:
**28.11.84 Bulletin 84/48**

(45) Publication of the grant of the patent:
**25.01.89 Bulletin 89/04**

(84) Designated Contracting States:
**AT BE CH DE FR GB IT LI LU NL SE**

(56) References cited:
**EP-A-0 000 549**
**GB-A-2 063 680**
**US-A-1 397 067**
**US-A-4 290 755**

(73) Proprietor: **Arruga Artal, Alberto, Dr.**
**Avda. San Jose, 115-1. F**
**Zaragoza - 8 (ES)**

(72) Inventor: **Arruga Artal, Alberto, Dr.**
**Avda. San Jose, 115-1. F**
**Zaragoza - 8 (ES)**

(74) Representative: **Waite, Anthony William et al**
**MARKS & CLERK Alpha Tower Suffolk Street**
**Queensway**
**Birmingham B1 1TT (GB)**

Courier Press, Leamington Spa, England.

## Description

The present invention refers to an improved fixed dental implant.

In U.K. Patent Specification No. 2063680 there is shown an implant for the jaw which is made up of three parts, namely an implant body, a bed, and an implant support. The bed is screwed into the implant body and the implant support is screwed into the bed, thereby in effect forming a one-piece construction which is screwed into the jawbone by means of ribs which form a bone screw.

European Patent Specification No. 0000549 shows a two-part implant comprising a generally tubular female part with a frusto-conical end, the tubular part having an external screw thread for engagement with the bone. The second, male part of the implant is a support member which has solid sections, matching the interior of the tubular part and frusto-conical end, as well as an outer head part. The two parts of the implant are connected together by matching splines between the female tubular part and the matching solid section male part or between the female frusto-conical part and the matching solid section male part.

An object of the invention is to provide an improved fixed dental implant which is practical and comfortable.

According to the invention there is provided an improved fixed dental implant of the type fixed, in use, to the maxilla, comprising one body provided with an external thread, for engagement with the maxilla, and a central axial hole, the other body, which bears a dental prosthesis, having an end inserted into said axial hole to fix the two bodies together, characterised in that the axial hole is made up of two different diameter parts, the larger of which extends to the surface of said one body facing the other body, in that an annular groove is provided in said larger diameter part at a zone close to the smaller diameter part, in that said one body has another groove on its said surface facing the other body, in that an O-ring seal is disposed in said another groove, and in that four peripheral recesses are provided at the juncture of the threaded surface and the surface of the one body which faces the other body, the recesses being arranged at the respective ends of two orthogonal diameters of said one body.

The invention will now be described, by way of example, with reference to the accompanying drawings, in which:

Figure 1 is a sectional elevation of a dental implant of the invention,

Figure 2 is a longitudinal section illustrating another embodiment of the body threaded to the maxilla,

Figure 3 is a longitudinal view partly in section illustrating a further embodiment of the body constituting the other part of the dental implant, and

Figure 4 illustrates, by way of example, a tool used to insert the body threaded to the maxilla.

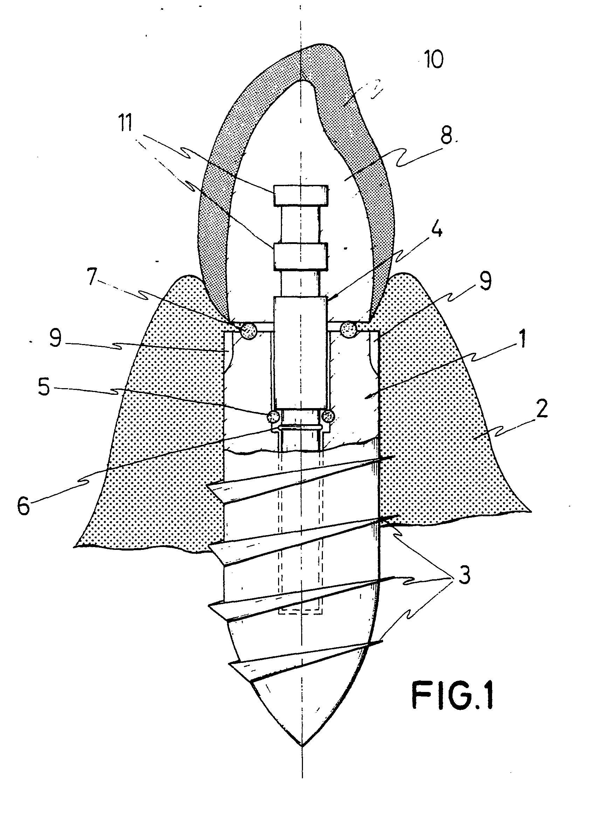

Referring to Figure 1, a body 1 is threaded to the maxilla 2 by means of a thread 3, mechanically acting as the dental alveola. This body 1 has a central axial hole in which one end of the other body 4 is housed. For the perfect setting thereof and to prevent it from moving out of the former, an O-ring seal 5 is inserted in the axial hole of the body 1, so that the body 4 is received therein, due to the annular ridges 6 with which it is provided, with a very slight axial movement, as a natural tooth.

An upper base of the body 1 is provided with an annular groove seating an O-ring seal 7 on which the prosthesis 8 rests, both this seal 7 and the previously mentioned seal 5 having the dual purpose of serving as force-breaker dampeners and guaranteeing a perfect setting of the implant.

At its top and adjacent sides, the body 1 has notches 9 which aid in the introduction and the extraction thereof. The notches are arranged at the respective ends of two orthogonal diameters of the body 1. Once the fixed body is set, its extraction will only be necessary in exceptional cases, for example, an accident damaging it or an allergy to the material of which it is made.

Eventually, due to the action of chewing, a cover 10 may be worn out, but the implant is so constructed that it permits extraction of the active visible part and the reinsertion of a new cover, wherefore it is possible to have fixed teeth indefinitely.

The dental prosthesis 8 is secured to the body 4 by the annular ridges 11 which are embedded therein.

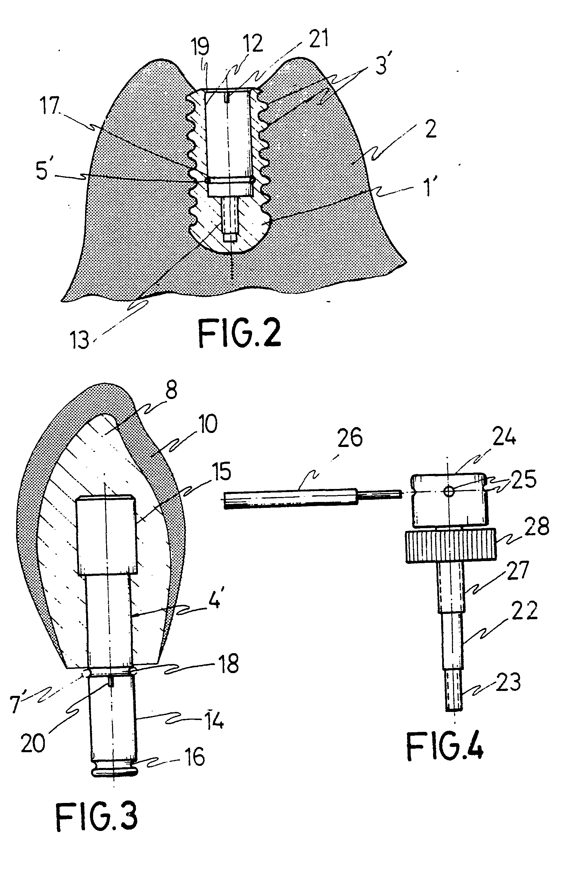

Referring to figures 2 and 3 in which like elements have identical numerals followed by the suffix "prime", the entire side surface of the body 1' constituting one of the independent parts of the dental implant threaded to the maxilla 2, has a thread 3', internally incorporating an axial hole 12 continuing into a blind hole 13 having a smaller diameter, this latter being internally threaded.

In figure 3, the cylindrical body 4' to which the dental prosthesis 8 is securely fixed, has a cylindrical pin 14 emerging from the dental prosthesis 8, the end thereof inserted in said pin having a widening 15 embedded therein without the possibility of being separated.

Fixing between both parts 1' and 4' constituting the dental implant, takes place when the pin 14, emerging from the dental prosthesis 8, is driven into the hole 12 with the help of an O-ring seal 5' housed in the corresponding annular complementary recesses 16 and 17 made, respectively, in the outer zone of the pin 14 and of the hole 12. A second O-ring seal 7' is also disposed in an annular hollow 18 of the pin 14 and in the zone adjacent to the dental prosthesis 8, this O-ring seal 7' being seated on a peripheral frusto-conical or bevelled recess 19 of the mouth of the threaded part 1'.

When joining the parts 1' and 4' as described, a slight articulation is obtained which permits a short movement of the dental prosthesis 8, in the same way as a natural tooth.

To prevent the dental prosthesis 8 from turning axially with respect to the threaded part 1' set in the maxilla 2, the invention provides a projection 20, disposed radially on the pin 14, which is made to face a slit 21 in the threaded part 1', close to the recess for the O-ring seal 7'.

If the cover 10 of the dental prosthesis 8 is damaged due to an unexpected rough movement, or it is merely worn out due to use, the implant of the invention presents the advantage of permitting extraction of the active visible part and the reinsertion of a new cover, in a completely simple manner.

To facilitate threading of the part 1' to the maxilla 2, a tool, such as that represented by way of example in figure 4, can be used. Such tool comprises a rod 22 provided at one of its ends with a threading 23 having an identical pitch, as that provided in the part 1' threaded to the maxilla 2, referenced 13. The other end of the rod 22 terminates in a head 24 having radial holes 25 to exert tightening by means of a handle 26. The zone of the rod 22 close to the head 24 has another thread 27 on which a nut 28 is placed, by means of which, once the thread 23 is fixed in the threaded hole 13 of the maxilla 2, and the nut 28 is tightened on the front of the part 1', both elements are blocked, wherefore rotation in one direction or the other can take place.

The bottom outer surface of the part 1' joined to the maxilla 2, has a rounded shape to facilitate introduction. Likewise the outer surface of this part 1' has a peripheral bevel to facilitate the slight articulation of the dental prosthesis 8. To prevent any foreign body from being introduced in the holes 12, 13 or recess 17, when the threaded part 1' is set in the maxilla 2, a closure socket, not shown in the drawings, is adjusted to the bevelled surface of the part 1 against which the nut 28 of the insertion tool will butt.

To prevent the relative turn of the two parts of the dental implant, the female part can be provided with an axial hollow having a polygonal section in which the part joined to the prosthesis is adjusted and guided, the rod of which will then have an identical section. In this case, the rod 22 of the insertion tool will likewise have a polygonal section, the lower threaded zone 23 and the nut 28 being eliminated.

**Claims**

1. An improved fixed dental implant of the type fixed, in use, to the maxilla (2), comprising one body (1, 1') provided with an external thread (3, 3'), for engagement with the maxilla, and a central axial hole, the other body (4, 4'), which bears a dental prosthesis (8), having an end inserted into said axial hole to fix the two bodies together, characterised in that the axial hole is made up of two different diameter parts, the larger of which extends to the surface of said one body (1, 1') facing the other body (4, 4'), in that an annular groove is provided in said larger diameter part at a zone close to the smaller diameter part, in that said one body (1, 1') has another groove on its said surface facing the other body, in that an O-ring seal (7, 7') is disposed in said another groove, and in that four peripheral recesses (9) are provided at the juncture of the threaded surface and the surface of the one body which faces the other body, the recesses being arranged at the respective ends of two orthogonal diameters of said one body.

2. An improved fixed dental implant according to claim 1, characterised in that an end of the other body (4) bearing the dental prosthesis (8) is embedded therein by means of two annular ridges (11), in that its cylindrical emerging end is stepped in accordance with the inside diameters of the threaded body (1), and in that said emerging end has an annular recess disposed in the part of the end having a smaller diameter and close to the stepping where an O-ring seal (5), partially inserted in the annular groove in the threaded body, is placed.

3. An improved fixed dental implant according to claim 1, characterised in that the one body (1') fixed to the maxilla is axially provided with a hole continuing into a blind, threaded hole (13) having a smaller diameter, in that the body (1') has two annular recesses, one close to the inner end of the larger diameter part of the axial hole and the other at the mouth of the axial hole, in that the inner end of this body is externally rounded and its outer mouth is frustoconical, and in that a further O-ring seal (5') and said O-ring seal (7') are placed in said annular recesses respectively, and fit in the corresponding complementary grooves of the other body (4') joined to the dental prosthesis, upon inserting said one body in the other body.

4. An improved fixed dental implant according to any one of the preceding claims, characterised in that it also comprises at least one slit (21) at the outer end of the axial hole in the body fixed to the maxilla, in which a corresponding radial projection (20) of the other body fits, to prevent relative angular movement between the bodies.

**Patentansprüche**

1. Verbessertes, fest eingesetztes, dentales Implantat einer Bauart, die im Gebrauch mit dem Oberkieferknochen (2) fest verbunden ist, mit einem Körper (1, 1'), der zum Eingriff mit dem Oberkieferknochen mit einem Aussengewinde (3, 3') versehen ist, sowie mit einer mittigen axialen Öffnung, während der andere Körper (4, 4'), der eine dentale Prothese (8) trägt, mit einem Ende zur Befestigung der beiden Körper miteinander in die axiale Öffnung eingesetzt ist, dadurch gekennzeichnet, dass die axiale Öffnung aus zwei Abschnitten mit unterschiedlichem Durchmesser besteht, wovon sich der grössere Abschnitt zur Oberfläche des einen Körpers (1, 1') erstreckt, der dem anderen Körper (4, 4') zugewandt ist, dass eine Ringnut in dem Abschnitt mit grossem Durchmesser in einem Bereich angebracht ist, der nahe am Abschnitt mit kleinem Durchmesser liegt, dass der eine Körper (1, 1') eine weitere Nut an der dem anderen Körper zugewandten Oberfläche aufweist, dass eine O-Ringdichtung (7, 7') in dieser anderen Nut angeordnet ist, dass vier umfangsseitige Einkerbungen an der Verbindungsstelle der mit Gewinde versehenen Oberfläche und der Oberfläche des einen Körpers vorgesehen sind, der dem anderen Körper zugewandt ist, und dass die Einkerbungen an den jeweiligen Enden zweier rechtwinklig zueinander liegender Durchmesser des einen Körpers angeordnet sind.

2. Verbessertes, fest eingesetztes, dentales Implantat nach Anspruch 1, dadurch gekennzeichnet, dass ein Ende des anderen Körpers (4), der die dentale Prothese (8) trägt, in dieser mittels zweier ringförmiger Kämme (11) eingebettet ist, dass sein vorstehendes, zylindrisches Ende entsprechend den Innendurchmessern des mit Gewinde versehenen Körpers (1) abgestuft ist, und dass das vorstehende Ende eine ringförmige Ausnehmung aufweist, die in dem Abschnitt des Endes angebracht ist, die einen kleineren Durchmesser aufweist und die nahe an der Abstufung liegt, an welcher eine O-Ringdichtung (5), die teilweise in die Ringnut des mit Gewinde versehenen Körpers eingesetzt ist, angebracht ist.

3. Verbessertes, fest eingesetztes, dentales Implantat nach Anspruch 1, dadurch gekennzeichnet, dass der eine am Kieferknochen befestigte Körper (1') axial mit einer Öffnung versehen ist, die sich in eine geschlossene, mit Gewinde versehene Öffnung (13) mit kleinerem Durchmesser fortsetzt, dass der Körper (1') zwei ringförmige Ausnehmungen aufweist, von denen eine nahe am inneren Ende des Abschnittes mit grösserem Durchmesser der axialen Öffnung liegt und der andere an der Mündung der axialen Öffnung, dass das innere Ende dieses Körpers aussen abgerundet und seine äussere Mündung kegelstumpfförmig ausgebildet ist, und dass eine weitere O-Ringdichtung (5') und die O-Ringdichtung (7') jeweils in den ringförmigen Ausnehmungen liegen und in die entsprechenden komplementären Nuten des anderen Körpers (4) passen, der mit der dentalen Prothese verbunden ist, wenn der eine Körper in den anderen Körper eingesetzt wird.

4. Verbessertes, fest eingesetztes, dentales Implantat nach einem der vorausgehenden Ansprüche, dadurch gekennzeichnet, dass es ferner mindestens einen Schlitz (21) am äusseren Ende der axialen Öffnung in dem am Kieferknochen befestigten Körper aufweist, in dem ein zugeordneter radialer Vorsprung (20) des anderen Körpers eingepasst ist, um eine relative Winkelbewegung zwischen den Körpern zu verhindern.

**Revendications**

1. Implant dentaire fixe perfectionné, de type fixé, usuel, sur la maxillaire (2), comprenant un corps (1, 1') constitué d'un filetage (3, 3') extérieur, pour être en prise sur le maxillaire, et un trou central axial, l'autre corps (4, 4'), qui soutient une prothèse (8) dentaire, possédant une extrémité insérée dans ce trou axial, pour fixer les deux corps ensemble, caractérisé en ce que le trou axial est constitué de deux parties de diamètre différent, la plus grande s'étendant vers la surface du premier corps (1, 1'), faisant face à l'autre corps, partie de plus grand diamètre dans laquelle est constituée une gorge annulaire située dans une zone proche de la partie de plus petit diamètre, dans laquelle un premier corps (1, 1') possède une autre gorge, faisant face à l'autre corps, en ce qu'un joint torique (7, 7') est disposé dans cette autre gorge, et en ce que quatre évidements (9) périphériques sont constitués à la jointure entre la surface filetée et la surface du premier corps qui fait face à l'autre corps, les évidements étant disposés aux extrémités respectives de deux diamètres perpendiculaires du premier corps.

2. Implant dentaire fixe perfectionné selon la revendication 1, caractérisé en ce qu'une extrémité de l'autre corps (4), supportant la prothèse (8) dentaire, est encastrée à l'intérieur, au moyen de deux bords annulaires (11), de sorte que son extrémité cylindrique émergeante est étagée en fonction des diamètres intérieurs du corps fileté (1), et en ce que cette extrémité émergeante possède un évidement annulaire disposé dans la partie de l'extrémité possédant un diamètre plus petit et près de l'étagement où est placé un joint torique (5), partiellement inséré dans la gorge annulaire du corps fileté.

3. Implant dentaire fixe perfectionné selon la revendication 1, caractérisé en ce que l'un (1') des corps, fixé sur le maxillaire, est pourvu axialement d'un trou (13) continuant en un trou borgne, fileté, possédant un diamètre plus petit, en ce que le corps (1') possède deux évidements annulaires, l'un près de l'extrémité inférieure de la partie à plus grand diamètre du trou axial, et l'autre à l'embouchure du trou axial, en ce que l'extrémité intérieure de ce corps est extérieurement arrondie et que son embouchure extérieure est tronconique, et en ce qu'un autre joint torique (5') et le joint torique (7') évoqué sont respectivement disposés dans ces évidements annulaires, et placés dans les gorges complémentaires correspondantes de l'autre corps (4) assemblé à la prothèse dentaire, insérant le premier corps sur l'autre corps.

4. Implant dentaire fixe perfectionné selon l'une quelconque des revendications précédentes, caractérisé en ce qu'il comprend également au moins une fente (21) sur l'extrémité extérieure du trou axial situé dans le corps fixé sur le maxillaire, fente dans laquelle se place une saillie (20) radiale correspondante de l'autre corps, afin d'éviter un mouvemet angulaire relatif entre les corps.

FIG.1

FIG.2

FIG.3

FIG.4